# FASCICULE DE BREVET EUROPEEN

(11) **EP 1 895 228 B1**
(45) Date de publication et mention de la délivrance du brevet: **06.05.2009**
(21) Numéro de dépôt: 07115379.5
(22) Date de dépôt: 31.08.2007
(51) Int. Cl.: F21S 8/10, G02B 6/00

(54) **Dispositif d'éclairage ou de signalisation d'aspect guide de lumière haute performance pour véhicule automobile**
Vorrichtung zur Beleuchtung oder Signalisierung vom Typ Hochleistungs-Lichtwellenleiter für Kraftfahrzeuge
Lighting or signalling device with the appearance of a high-performance light guide for an automobile vehicle

(30) Priorité: 01.09.2006 FR 0607718
(43) Date de publication de la demande: 05.03.2008
(73) Titulaire: VALEO VISION, 93012 Bobigny (FR)
(72) Inventeur: Gasquet, Jean-Claude, 89100 Saint Clément (FR)
(74) Mandataire: Renous Chan, Véronique

(56) Documents cités:
- EP-A- 1 674 789
- WO-A-99/09349
- GB-A- 2 321 300
- US-A1- 2003 085 642

## Description

### DOMAINE TECHNIQUE DE L'INVENTION

La présente invention a pour objet un dispositif d'éclairage ou de signalisation d'aspect guide de lumière haute performance pour véhicule automobile. L'invention a essentiellement pour but de proposer une solution pour réaliser une fonction d'éclairage ou de signalisation, dans laquelle on utilise au moins une diode électroluminescente, présentant un aspect général semblable à un guide de lumière, tout en offrant la possibilité de réaliser de nouveaux concepts de style et présentant de hautes performances en terme de maîtrise optimale du pilotage des signaux lumineux au sein du dispositif projecteur considéré.

Le domaine de l'invention est, d'une façon générale, celui de l'éclairage et de la signalisation appliqué aux véhicules automobiles. Dans ce domaine, on connaît différents types de dispositifs, parmi lesquels on trouve essentiellement les dispositifs suivants, directement concernés par l'invention:
- des dispositifs d'éclairage situés à l'arrière du véhicule avec, notamment, les feux de recul ;
- des dispositifs de signalisation situés à l'avant (ou sur le côté) du véhicule avec, notamment, des indicateurs de direction, des rappels de clignotants ;
- des dispositifs de signalisation situés à l'arrière du véhicule avec, notamment, des feux antibrouillards, des feux arrière, des indicateurs de direction et des feux stop, des feux "stop supérieur" ;
- des dispositifs d'éclairage intérieur avec notamment les plafonniers principaux (Avant, Central, Arrière) ;
- des dispositifs d'éclairage participant au style, avec par exemple des lignes de style éclairées sur les ailes du véhicule ou sur le tableau de bord, l'habillage de portières ou encore l'éclairage du pavillon de toit.

Pour l'ensemble de ces dispositifs, traditionnellement, on utilisait par le passé des sources lumineuses de type lampes classiques ou éventuellement des lampes halogènes. Mais depuis quelques années, les équipementiers automobiles ont proposé l'utilisation de diodes électroluminescentes, ou leds, notamment pour les feux de signalisation. Les diodes électroluminescentes présentent un certain nombre d'avantages :
- tout d'abord, depuis longtemps, on sait que ce type de diodes ne rayonnent pas de façon omnidirectionnelle, mais rayonnent dans un demi-espace opposé à un substrat qui supporte la jonction P-N de la diode considérée ; plus précisément, une led émet un ensemble de signaux lumineux compris dans un cône dans le demi-plan considéré. Ainsi, en utilisant un rayonnement plus directif que les lampes halogènes, ou à décharge, de l'état de la technique, la quantité d'énergie perdue est moins importante qu'avec les lampes à décharge ou halogènes ;
- ensuite, on a récemment perfectionné ces diodes en terme d'intensité de rayonnement ; elles peuvent désormais rayonner un flux d'environ 100 lumens. De plus, les diodes fabriquées émettent un rayonnement depuis longtemps dans le rouge, mais désormais également dans le blanc, ce qui accroît le champ de leurs utilisations envisageables. La quantité de chaleur qu'elles dégagent est relativement limitée, et un certain nombre de contraintes, liées à la dissipation de la chaleur dans les dispositifs projecteurs de l'état de la technique, disparaissent ;
- enfin, les diodes consomment moins d'énergie, même à intensité de rayonnement égal, que les lampes à décharge ou les lampes halogènes ; elles sont peu encombrantes, et leur forme particulière offre des possibilités nouvelles pour la réalisation de nouvelles gammes de style.

D'une façon générale, les diodes électroluminescentes sont disposées sur un support de type substrat (les plus connus dans le domaine automobile étant les substrats SMI, FR4, CEM1...), qui est, selon une définition générale, un matériau destiné à recevoir l'impression d'un circuit électronique, et /ou les différents composants constituant ce circuit, le tout formant une carte de circuit imprimé, ou PCB (pour Printed Circuit Board en langue anglaise). On peut désormais distinguer notamment deux types de diodes : les diodes dites à émission axiale, qui émettent un faisceau lumineux selon un cône avec une direction principale d'émission sensiblement perpendiculaire au plan du PCB les supportant, et les diodes dites à émission latérales, qui émettent un faisceau lumineux dans une direction principale présentant un angle d'une vingtaine de degrés par rapport au plan du PCB les supportant.

### ARRIERE-PLAN TECHNOLOGIQUE DE L'INVENTION

Les leds sont ainsi de plus en plus fréquemment utilisées dans différents dispositifs d'éclairage ou de signalisation, d'autant plus qu'elles permettent d'obtenir des évolutions notables en terme de style des dispositifs projecteurs. On les utilise ainsi de plus en plus souvent pour servir de sources lumineuses associées à des guides de lumière. D'une façon générale, les guides de lumière utilisées dans le monde automobile sont des fibres optiques qui assurent une diffusion lumineuse selon une direction principale d'émission globalement perpendiculaire à leur plus grande dimension. A cet effet, une multitude de réflexions internes à la fibre optique et de réfractions au travers de sa face visible. Les guides de lumière se caractérisent par leur épaisseur nettement plus faible que leur longueur, le rapport entre ces dimensions étant fréquemment compris entre dix et vingt.

Les signaux lumineux circulant à l'intérieur des guides de lumière sont typiquement émis par des leds, disposées à chaque extrémité du guide de lumière considéré. Si les guides de lumière offrent la possibilité de proposer des dispositifs d'éclairage et de signalisation présentant une grande diversité de formes et d'aspect, il demeure cependant, selon les circonstances de leur utilisation, des inconvénients à leur emploi pour la réalisation de différents fonctions. Un inconvénient majeur réside dans les aspects pointillistes, pixellisés, de la lumière diffusée au travers de la face visible des guides de lumière : du fait de leur principe de base, mêlant, sur une longueur relativement importante, un nombre important de réflexions internes et de diffusions au travers de leur face visible, le pilotage précis de la lumière à émettre selon une direction principale d'émission est impossible à réaliser. Un tel principe de base entraîne par ailleurs un rendement optique faible. Enfin, en en fournissant de la lumière que par les extrémisées du guide de lumière, on limite les possibilités d'évolution pour l'utilisation de ces guides.

Le document US 2003/0085642 A montre un dispositif d'éclairage d'après le préambule de la revendication 1.

### DESCRIPTION GENERALE DE L'INVENTION

L'objet de l'invention propose une solution aux problèmes qui viennent d'être exposés. D'une façon générale, l'invention propose la réalisation d'un dispositif projecteur permettant d'avoir un aspect guide de lumière, donnant la possibilité de réaliser de nouveaux concepts de style dans les feux de signalisation et d'éclairage qui ont été précédemment mentionnés, mais en s'affranchissant des problèmes techniques rencontrés avec les véritables guides de lumière. A cet effet, dans l'invention, on propose de réaliser un module de diffusion de lumière, avec une face visible de sortie de la lumière présentant l'apparence d'un guide de lumière, mais dans lequel la lumière émise, toujours par des leds, est émise directement selon un, ou proche d'un, axe d'éclairage principal (axe dans lequel une intensité maximale du dispositif projecteur considéré est mesurée) du dispositif projecteur considéré. Dans le module de diffusion, les signaux lumineux suivent ainsi un chemin optique déterministe, en grande partie intégré à la matière, qui peut être contrôlé et maîtrisé par des systèmes optiques classiques présents dans ledit module. Avantageusement, le module de diffusion est une pièce monobloc, comportant des moyens de positionnement, par rapport à la led, fiables pour garantir une position relative constante des différents systèmes optiques que ledit module comporte.

L'invention concerne donc essentiellement un dispositif d'éclairage ou de signalisation pour véhicule automobile, comportant notamment au moins une source lumineuse de type diode électroluminescente émettant, vers un module de diffusion, une pluralité de rayons lumineux selon un cône d'axe central perpendiculaire à un plan défini par une carte de circuit imprimé sur laquelle est positionnée ladite source lumineuse, le module de diffusion comportant :
- une zone d'entrée, présentant une épaisseur d'entrée, équipée d'un premier système optique pour recevoir au moins une partie de la pluralité des rayons lumineux et pour collimater dans ladite épaisseur d'entrée lesdits rayons lumineux reçus ;
- une zone centrale, présentant une largeur centrale, équipée d'un deuxième système optique, pour recevoir et collimater dans ladite largeur centrale les rayons lumineux collimatés par le premier système optique
- une zone de sortie, présentant une largeur de sortie, équipée d'un troisième système optique pour recevoir et assurer une diffusion, dans ladite largeur de sortie, des rayons lumineux collimatés par le deuxième système optique, et une face de sortie pour diffuser les rayons lumineux après leur passage dans le module de diffusion.

Selon l'invention, le troisième système optique comporte une tranchée s'étendant selon au moins une partie de la largeur de sortie, ladite tranchée présentant une face d'entrée et une face de sortie formant des dioptres.

Outre les caractéristiques principales qui viennent d'être mentionnées dans le paragraphe précédent, le dispositif projecteur selon l'invention peut présenter une ou plusieurs caractéristiques complémentaires parmi les suivantes :
- la zone de sortie présente une épaisseur de sortie faible devant la largeur de sortie, présentant ainsi un aspect de guide de lumière ;
- le deuxième système optique est constitué d'une lentille interne et de réflecteurs internes réalisés sous forme de stries dans l'épaisseur de la zone centrale ;
- le premier système optique comporte une lentille de Fresnel ;
- le premier système optique comporte un prisme réfléchissant pour dévier vers la zone centrale au moins une partie des signaux lumineux collimatés par ledit premier système optique ;
- le module de diffusion comporte une zone complémentaire, disposée entre la zone centrale et la zone de sortie, comportant un quatrième système optique apte à dévier, vers une direction principale d'émission du dispositif projecteur, les signaux lumineux collimatés par le deuxième système optique.
- la zone de sortie a une section de forme globalement cylindrique ;
- la zone de sortie comporte une face de sortie courbée apte à étaler les signaux lumineux en sortie du module de diffusions selon plan perpendiculaire à une direction principale d'émission du dispositif projecteur ;
- le module de diffusion comporte au moins un pion de fixation pour fixer ledit module de diffusion sur la carte de circuit imprimé supportant la diode électroluminescente émettant les signaux lumineux vers le module considéré ;
- la zone d'entrée présente une largeur d'entrée, et en ce que le module de diffusion comporte un premier pion de fixation et un deuxième pion de fixation, disposé de part et d'autre de la largeur d'entrée ;
- le module de diffusion est une pièce monobloc ;
- le module de diffusion est réalisé en polyméthyl méthacrylate ;
- le module de diffusion est réalisé en polycarbonate ;
La présente invention se rapporte également à tout dispositif projecteur intégrant un ou plusieurs modules de base élémentaires intervenant dans le dispositif projecteur qui vient d'être mentionné, avec ses caractéristiques principales et éventuellement une ou plusieurs caractéristiques complémentaires, la face de sortie apparente, continue, présentant un aspect semblable à celui d'un guide de lumière classique.

Le dispositif projecteur selon l'invention peut notamment être d'un des types suivants : feu de recul, indicateur de direction, rappel de clignotant, feu antibrouillard, feu stop, feu stop supérieur, plafonnier, ligne de style éclairée.

Enfin, la présente invention se rapporte à tout véhicule automobile équipé d'au moins un dispositif projecteur présentant les caractéristiques principales, et éventuellement une ou plusieurs caractéristiques complémentaires, mentionnées.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, une représentation schématique en coupe horizontale d'un exemple de réalisation d'un module de diffusion, associé à une led, intervenant dans un dispositif projecteur selon l'invention ;
- à la figure 2, une représentation détaillée d'un premier système optique intervenant dans le module de diffusion de la figure 1 ;
- à la figure 3, une vue en coupe verticale du module de diffusion de la figure 1, illustrant l'étalement vertical des signaux lumineux en sortie dudit module ;
- à la figure 4, une vue d'ensemble d'une barrette monobloc comportant quatre modules de diffusion de la figure 1 ;
- à la figure 5-A, une première vue d'une première variante de réalisation de dispositif projecteur selon l'invention ;
- à la figure 5-B, une deuxième vue de la variante de la figure 5-A;
- à la figure 6-A, une première vue d'une deuxième variante de réalisation de dispositif projecteur selon l'invention ;
- à la figure 6-B, une deuxième vue, en coupe, de la variante de la figure 6-A.

### DESCRIPTION DETAILLEE DES FORMES DE REALISATION PREFEREES DE L'INVENTION

Les différents éléments apparaissant sur plusieurs figures auront gardé, sauf précision contraire, la même référence.

Par convention, les termes "avant" et "après" utilisés pour positionner deux éléments dans une pièce donnée désignent la position relative desdits éléments en considérant un sens de parcours des signaux lumineux dans la pièce considérée dans des conditions normales d'utilisation.

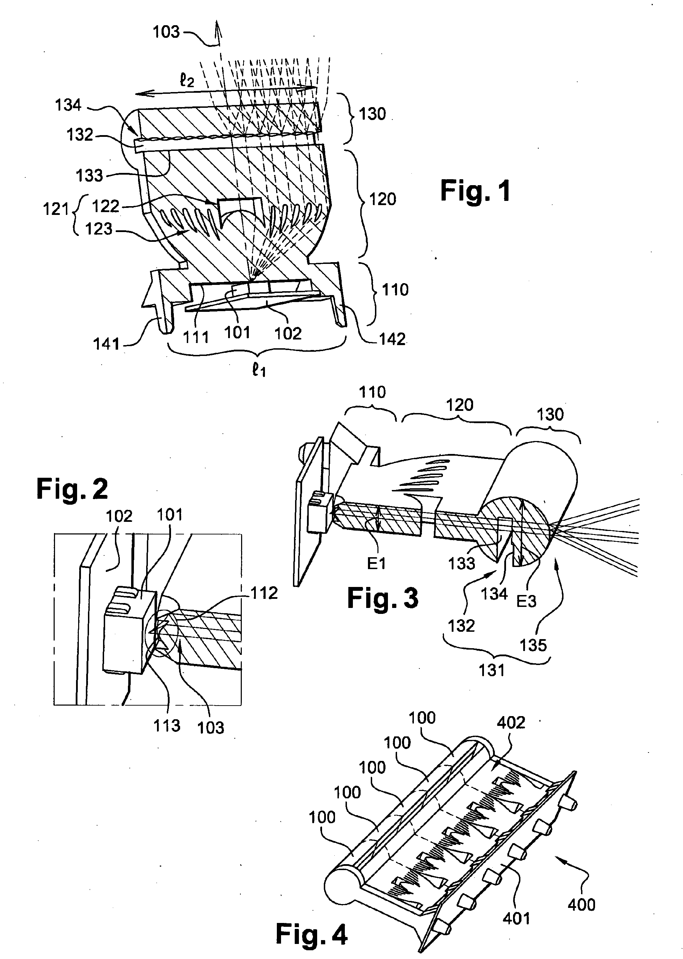

Les figures 1 à 3 montrent un premier exemple d'un module de diffusion 100 intervenant dans les dispositifs projecteurs selon l'invention. Le module de diffusion 100 est associé à une led 101 unique, à émission axiale dans l'exemple représenté. La led 101 est supportée par une carte de circuit imprimé 102. La led 101 émet une pluralité de faisceaux lumineux contenus dans un cône d'émission, dirigé vers le module de diffusion 100, et présentant un axe central 103 centré sur la diode et perpendiculaire au plan du PCB 102.

On peut décomposer le module de diffusion 100 en trois zones principales :
- Une première zone 110 correspond à une zone d'entrée du module de diffusion 100; elle comporte une face d'entrée 111, au niveau de laquelle une partie importante des signaux lumineux émis par la led 101 pénètre dans le module de diffusion 100. Avantageusement, c'est la totalité de ces faisceaux qui pénètre dans le module de diffusion 100. La zone d'entrée 110 se caractérise notamment par une épaisseur d'entrée E1, typiquement comprise entre 1 et 5 millimètres, et par une première largeur I1. Elle comporte également un premier système optique 112, dont un exemple de réalisation est visible en détail sur la figure 2, et dont la fonction est de collimater, dans l'épaisseur d'entrée E1, les signaux lumineux reçus. D'une façon générale, l'expression collimater des signaux lumineux dans une dimension (longueur, largeur, épaisseur...) donnée signifie que les faisceaux considérés sont déviés de façon à se propager selon des directions parallèles aux plans délimitant la dimension considérée. Ainsi, dans l'exemple représenté, si on considère, par convention, que le plan du PCB 102 est orienté verticalement, alors les signaux lumineux collimatés dans l'épaisseur de la zone d'entrée 110 sont horizontaux.
   Le premier système optique 112 consiste essentiellement en une lentille de Fresnel 113. D'une manière générale, les différents systèmes optiques qui sont évoqués dans la présente description font intervenir un ou plusieurs éléments d'optique classique, de type lentilles de Fresnel, dioptres ou prismes. La conception de ces systèmes optiques est aisée pour tout spécialiste du domaine de la propagation des signaux lumineux. Aussi, les exemples de réalisation des systèmes optiques qui seront évoqués et/ou représentés sur les figures décrites, ne sont en rien limitatifs, des éléments d'optique classique différents de ceux représentés pouvant tout aussi bien être utilisés pour obtenir une même collimation ou déviation de signaux lumineux.
- Une deuxième zone 120, formant la continuité de la zone d'entrée 110, correspond à une zone centrale du module de diffusion 100. Elle comporte un deuxième système optique 121, composé ici d'une lentille centrale 122 intégrée dans le module de diffusion 100 et d'une pluralité de stries 123, consistant en des cavités verticales réalisées dans l'épaisseur de ladite zone centrale. La zone centrale 120 est caractérisée par une largeur I2, identique dans cet exemple à la largeur I1, constante après la traversée du deuxième système optique 121. Elle présente la même épaisseur E1 que la zone d'entrée 110. La fonction du deuxième système optique 121 est de recevoir les faisceaux collimatés par le premier système optique, et de les collimater dans la largeur I2. En d'autres termes, les signaux lumineux, après avoir traversé le deuxième système optique 121, sont contenus dans des plans verticaux. Du fait de la première collimation qu'ils ont subie lors du passage dans le premier système optique 112, les signaux lumineux issus du deuxième système optique 121 sont parallèles à l'axe central 103 du cône d'émission de la led 101. On dispose ainsi, en sortie du deuxième système optique 121, d'un flux de signaux lumineux parfaitement pilotés, déterministe.
- Une troisième zone 130, formant la continuité de la zone centrale 120, correspond à une zone de sortie du module de diffusion 100. Elle est caractérisée par la largeur I2 et par une épaisseur visible E3, de valeur beaucoup plus faible que la valeur de sa largeur I2 - le rapport entre ces deux valeurs étant typiquement compris entre 10 et 25. Une telle caractéristique confère un aspect de guide de lumière au module de diffusion 100 lorsqu'il est regardé par une personne placée face au module de diffusion considéré lorsque ce dernier est positionné sur un véhicule. La zone de sortie 130 comporte un troisième système optique 131, qui peut se décomposer en deux parties principales :

- une première partie est constituée par une tranchée 132, s'étendant sur toute la largeur I2, et sur une profondeur suffisante pour intercepter une grande majorité, voire la totalité, des signaux lumineux issus du deuxième système optique. Elle forme ainsi une zone de vide dans le matériau utilisé pour fabriquer le module de diffusion 100. La tranchée 132 comporte donc une face d'entrée 133 et une face de sortie 134 qui constituent des dioptres. Soit la face d'entrée 133, soit la face de sortie 134, soit encore ces deux faces, présentent des formes appropriées pour provoquer une diffusion de la lumière dans la largeur de la zone de sortie 130 : chaque signal lumineux, en sortie de la tranchée 132, est étalé en une pluralité de signaux contenus ici dans un plan horizontal. Par ailleurs, la présence de la tranchée 132 donne l'impression d'une surface apparente éclairée, et non plus d'une source ponctuelle lumineuse, ce qui renforce l'impression de guide de lumière.
- une deuxième partie est constituée par une face de sortie 135 du module de diffusion lui-même. Dans l'exemple représenté, la zone de sortie 130 présente une section globalement cylindrique. La face de sortie 135 est ainsi courbée. Une telle caractéristique assure un étalement vertical des signaux lumineux en sortie du module de diffusion 100, comme montré schématiquement à la figure 3.

Avantageusement, le module de diffusion 100 est une pièce monobloc, réalisée en un unique matériau transparent, par exemple du type polyméthylméthacrylate (PMMA) ou polycarbonate (PC). Ainsi, on s'affranchit de problèmes de centrages des différents systèmes optiques les uns par rapport aux autres.

Avantageusement, le module de diffusion 100 comporte un premier pion de fixation 141 et une deuxième pion de fixation 142, disposés, au niveau de la zone d'entrée 110, de part et d'autre du premier système optique 112. Les pions de fixation sont destinés à être bouterollés directement sur la carte de circuit imprimé supportant la diode émettant les signaux lumineux traversant le module de diffusion considéré. Ainsi, aucun problème de centrage entre la led et le module de diffusion qui lui est associé ne peut être rencontré.

La forme générale du module de diffusion 100, et la présence des pions de fixation 141 et 142 permettent de réaliser aisément une barrette monobloc 402 du type de celle montrée à la figure 4, où cinq modules de diffusion 100, ont été associés sur un même support de PCB 401, supportant cinq leds pour former un assemblage 400. L'association des modules de diffusion 100 est réalisée dès l'opération de moulage de la barrette 400, la barrette constituée ne présentant ainsi pas de discontinuité matérielle entre les différents modules de diffusion, ce qui évite des discontinuités dans le faisceau lumineux résultant. Le module de diffusion 100 reliant une source et différents systèmes optiques peut ainsi être dupliqué selon la puissance de la source lumineuse et les exigences de style. En multipliant ainsi le nombre de modules de diffusion et de diodes associées, on augmente ainsi l'intensité lumineuse disponible pour les dispositifs projecteurs concernés par l'invention.

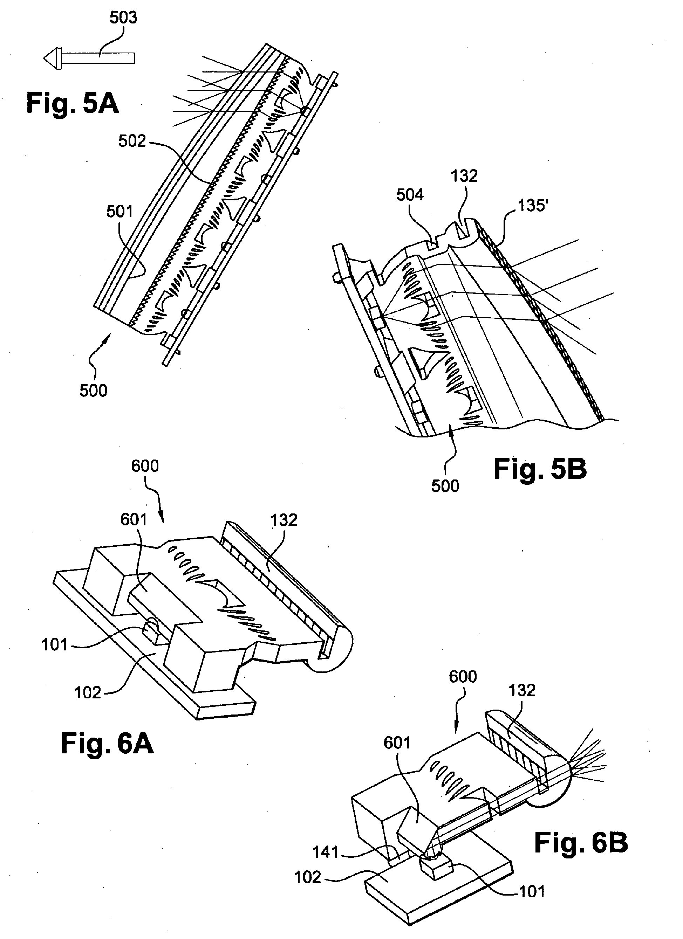

Les figures 5-A et 5-B montrent une première variante 500 de réalisation du module de diffusion 100 dans laquelle une zone complémentaire 501, disposée après la zone centrale 120 et avant la zone de sortie 130, qui présente un quatrième système optique 502 dont la fonction est de modifier l'orientation des signaux issus du deuxième système optique pour les diriger parallèlement à un axe principal d'émission 503 de la fonction à réaliser par le dispositif projecteur considéré. Dans l'exemple représenté, le quatrième système optique 502 prend la forme d'une tranchée complémentaire 504, dont les parois présentent des formes spécifiques aptes à provoquer la déviation recherchée. La présence d'un tel quatrième système optique 502 permet une grande souplesse dans la mise en place des modules de diffusion, et permet de pouvoir conserver, quel que soit l'emplacement final du module de diffusion, un PCB plan.

Sur ces figures, on constate par ailleurs que le module de diffusion 500 présente une face de sortie 135' comportant une pluralité de motifs géométriques, rectangulaires dans le cas présent. La présence de tels motifs permet de satisfaire des exigences de certaines fonctions à réaliser.

Les figures 6-A et 6-B montrent une deuxième variante 600 de réalisation du module de diffusion 100 dans laquelle l'axe d'émission de la led est perpendiculaire à la direction principale d'émission d'une fonction à réaliser. Dans cet exemple, on propose de compléter le premier système optique par un prisme 601 qui, par réflexion totale, fait subir une inclinaison de 90 degrés aux signaux lumineux issus du premier système optique 112 initial.

## Revendications

1. Dispositif d'éclairage ou de signalisation pour véhicule automobile, comportant notamment au moins une source lumineuse de type diode électroluminescente (101) émettant, vers un module de diffusion (100 ; 500 ; 600), une pluralité de rayons lumineux selon un cône d'axe central (103) perpendiculaire à un plan défini par une carte de circuit imprimé (102) sur laquelle est positionnée ladite source lumineuse, le module de diffusion comportant :
- une zone d'entrée (110), présentant une épaisseur d'entrée (E1), équipée d'un premier système optique (112) pour recevoir au moins une partie de la pluralité des rayons lumineux et pour collimater dans ladite épaisseur d'entrée lesdits rayons lumineux reçus ;
- une zone centrale (120), présentant une largeur centrale (12), équipée d'un deuxième système optique (131), pour recevoir et collimater dans ladite largeur centrale les rayons lumineux collimatés par le premier système optique ;
- une zone de sortie (130), présentant une largeur de sortie, équipée d'un troisième système optique (131) pour recevoir et assurer une diffusion, dans ladite largeur de sortie, des rayons lumineux collimatés par le deuxième système optique, et une face de sortie (135) pour diffuser les rayons lumineux après leur passage dans le module de diffusion,
**caractérisé en ce que** le troisième système optique comporte une tranchée (132) s'étendant selon au moins une partie de la largeur de sortie, ladite tranchée présentant une face d'entrée (133) et une face de sortie (134) formant des dioptres.

2. Dispositif d'éclairage ou de signalisation selon la revendication précédente **caractérisé en ce que** la zone de sortie présente une épaisseur de sortie (E3) faible devant la largeur de sortie, présentant ainsi un aspect de guide de lumière.

3. Dispositif d'éclairage ou de signalisation selon l'une au moins des revendications précédentes **caractérisé en ce que** le deuxième système optique est constitué d'une lentille interne (122) et de réflecteurs internes réalisés sous forme de stries (123) dans l'épaisseur de la zone centrale.

4. Dispositif d'éclairage ou de signalisation selon l'une au moins des revendications précédentes **caractérisé en ce que** le premier système optique comporte une lentille de Fresnel (113).

5. Dispositif d'éclairage ou de signalisation selon l'une au moins des revendications précédentes **caractérisé en ce que** le premier système optique comporte un prisme (601) réfléchissant pour dévier vers la zone centrale au moins une partie des signaux lumineux collimatés par ledit premier système optique.

6. Dispositif d'éclairage ou de signalisation selon l'une au moins des revendications précédentes **caractérisé en ce que** le module de diffusion comporte une zone complémentaire (501), disposée entre la zone centrale et la zone de sortie, comportant un quatrième système optique (502) apte à dévier, vers une direction principale d'émission (503) du dispositif projecteur, les signaux lumineux collimatés par le deuxième système optique.

7. Dispositif d'éclairage ou de signalisation selon l'une au moins des revendications précédentes **caractérisé en ce que** la zone de sortie a une section de forme globalement cylindrique.

8. Dispositif d'éclairage ou de signalisation selon l'une au moins des revendications précédentes **caractérisé en ce que** la zone de sortie comporte une face de sortie courbée (135) apte à étaler les signaux lumineux en sortie du module de diffusions selon plan perpendiculaire à une direction principale d'émission du dispositif projecteur.

9. Dispositif d'éclairage ou de signalisation selon l'une au moins des revendications précédentes **caractérisé en ce que** le module de diffusion comporte au moins un pion de fixation (141 ; 142) pour fixer ledit module de diffusion sur la carte de circuit imprimé supportant la diode électroluminescente émettant les signaux lumineux vers le module considéré.

10. Dispositif d'éclairage ou de signalisation selon la revendication précédente **caractérisé en ce que** la zone d'entrée présente une largeur d'entrée (I1), et **en ce que** le module de diffusion comporte un premier pion de fixation (141) et un deuxième pion de fixation (142), disposé de part et d'autre de la largeur d'entrée.

11. Dispositif d'éclairage ou de signalisation selon l'une au moins des revendications précédentes **caractérisé en ce que** le module de diffusion est une pièce monobloc.

12. Dispositif d'éclairage ou de signalisation selon la revendication précédente **caractérisé en ce que** le module de diffusion est réalisé en polyméthyl méthacrylate.

13. Dispositif d'éclairage ou de signalisation selon la revendication 11 **caractérisé en ce que** le module de diffusion est réalisé en polycarbonate.

14. Dispositif projecteur **caractérisé en ce qu'**il comporte une barrette monobloc (402) constituée de plusieurs dispositifs d'éclairage ou de signalisation selon l'une au moins des revendications précédentes, les faces de sortie des zones de sortie étant alignées dans le sens de leur largeur.

15. Dispositif projecteur selon la revendication 14 précédentes **caractérisé en ce qu'**il est d'un des types suivants : feu de recul, indicateur de direction, rappel de clignotant, feu antibrouillard, feu stop, feu stop supérieur, plafonnier, ligne de style éclairée.

## Claims

1. Lighting or signalling device for a motor vehicle, comprising in particular at least one source of light of the electroluminescent diode type (101), which emits to a diffusion module (100; 500; 600) a plurality of light rays according to a central axis cone (103) which is perpendicular to a plane defined by a printed circuit board (102) on which the said source of light is positioned, the diffusion module comprising:
- an input area (110) which has an input thickness (E1) equipped with a first optical system (112) in order to receive at least part of the plurality of rays of light, and to collimate in the said input thickness the said rays of light received;
- a central area (120), which has a central width (12), equipped with a second optical system (131), in order to receive and collimate in the said central width the rays of light collimated by the first optical system;
- an output area (130), which has an output width, equipped with a third optical system (131), in order to receive and assure diffusion in the said output width of the rays of light collimated by the second optical system, and an output surface (135) in order to diffuse the rays of light after their passage into the diffusion module, **characterised in that** the third optical system comprises a trench (132) which extends according to at least part of the output width, the said trench having an input surface (133) and an output surface (134) which form dioptres.

2. Lighting or signalling device according to the preceding claim, **characterised in that** the output area has a small output thickness (E3) in front of the output width, thus having the appearance of a light guide.

3. Lighting or signalling device according to at least one of the preceding claims, **characterised in that** the second optical system consists of an internal lens (122) and of internal reflectors in the form of serrations (123) in the thickness of the central area.

4. Lighting or signalling device according to at least one of the preceding claims, **characterised in that** the first optical system comprises a Fresnel lens (113).

5. Lighting or signalling device according to at least one of the preceding claims, **characterised in that** the first optical system comprises a reflective prism (601) to deflect to the central area at least part of the light signals collimated by the said first optical system.

6. Lighting or signalling device according to at least one of the preceding claims, **characterised in that** the diffusion module comprises a complementary area (501) which is disposed between the central area and the output area, comprising a fourth optical system (502) which can deflect to a main direction of emission (503) of the headlight device the light signals collimated by the second optical system.

7. Lighting or signalling device according to at least one of the preceding claims, **characterised in that** the output area has a cross-section with a globally cylindrical form.

8. Lighting or signalling device according to at least one of the preceding claims, **characterised in that** the output area comprises a curved output surface (135) which can spread light signals at the output from the diffusion module according to a plane which is perpendicular to a main direction of emission of the headlight device.

9. Lighting or signalling device according to at least one of the preceding claims, **characterised in that** the diffusion module comprises at least one securing lug (141; 142) to secure the said diffusion module on the printed circuit board which supports the electroluminescent diode which emits the light signals to the module concerned.

10. Lighting or signalling device according to the preceding claim, **characterised in that** the input area has an input width (11), and **in that** the diffusion module comprises a first securing lug (141) and a second securing lug (142) disposed on both sides of the input width.

11. Lighting or signalling device according to at least one of the preceding claims, **characterised in that** the diffusion module is a part in a single piece.

12. Lighting or signalling device according to the preceding claim, **characterised in that** the diffusion module is made of polymethyl methacrylate.

13. Lighting or signalling device according to claim 11, **characterised in that** the diffusion module is made of polycarbonate.

14. Headlight device **characterised in that** it comprises a bar in a single piece (402) which consists of a plurality of lighting or signalling devices according to at least one of the preceding claims, the output surfaces of the output areas being aligned in the direction of their width.

15. Headlight device according to the preceding claim, **characterised in that** it is one of the following types: reversing light, direction indicator, high indicator, fog lamp, stop light, upper stop light, cab light, lit style line.

## Patentansprüche

1. Beleuchtungs- oder Signalgebungsvorrichtung für Kraftfahrzeuge mit insbesondere wenigstens einer Lichtquelle vom Typ Leuchtdiode (101), die zu einem Lichtstreuungsmodul (100; 500; 600) eine Vielzahl von Lichtstrahlen in einem Kegel mit einer Mittelachse (103) emittiert, die zu einer Ebene lotrecht verläuft, welche durch eine Leiterplatte (102) definiert ist, auf der die Lichtquelle platziert ist, wobei das Lichtstreuungsmodul umfasst:
- einen Eintrittsbereich (110) mit einer Eintrittsdicke (E1), der mit einem ersten optischen System (112) zur Aufnahme wenigstens eines Teils der Vielzahl der Lichtstrahlen und zur Kollimation der aufgenommenen Lichtstrahlen in der Eintrittsdicke ausgestattet ist;
- einen Mittelbereich (120) mit einer zentralen Breite (12), der mit einem zweiten optischen System (131) zur Aufnahme und zur Kollimation der durch das erste optische System kollimierten Lichtstrahlen in der zentralen Breite ausgestattet ist;
- einen Austrittsbereich (130) mit einer Austrittsbreite, der mit einem dritten optischen System (131) zur Aufnahme und zur Streuung der durch das zweite optische System kollimierten Lichtstrahlen in der Austrittsbreite ausgestattet ist, sowie mit einer Austrittsfläche (135) zur Streuung der Lichtstrahlen, nachdem diese das Lichtstreuungsmodul passiert haben,
**dadurch gekennzeichnet, dass** das dritte optische System einen Einschnitt (132) aufweist, der entlang wenigstens eines Teils der Austrittsbreite verläuft, wobei der Einschnitt eine Eintrittsfläche (133) und eine Austrittsfläche (134) umfasst, die Diopter bilden.

2. Beleuchtungs- oder Signalgebungsvorrichtung nach dem vorhergehenden Anspruch,
**dadurch gekennzeichnet, dass** der Austrittsbereich eine bezüglich der Austrittsbreite geringe Austrittsdicke (E3) aufweist und somit das Aussehen eines Lichtleiters hat.

3. Beleuchtungs- oder Signalgebungsvorrichtung nach wenigstens einem der vorhergehenden Ansprüche,
**dadurch gekennzeichnet, dass** das zweite optische System von einer Innenlinse (122) und Innenreflektoren gebildet ist, die in Form von Rippen (123) in der Dicke des Mittelbereichs ausgeführt sind.

4. Beleuchtungs- oder Signalgebungsvorrichtung nach wenigstens einem der vorhergehenden Ansprüche,
**dadurch gekennzeichnet, dass** das erste optische System eine Fresnel-Linse (113) umfasst.

5. Beleuchtungs- oder Signalgebungsvorrichtung nach wenigstens einem der vorhergehenden Ansprüche,
**dadurch gekennzeichnet, dass** das erste optische System ein Reflexionsprisma (601) aufweist, um wenigstens einen Teil der durch das erste optische System kollimierten Lichtsignale zum Mittelbereich abzulenken.

6. Beleuchtungs- oder Signalgebungsvorrichtung nach wenigstens einem der vorhergehenden Ansprüche,
**dadurch gekennzeichnet, dass** das Lichtstreuungsmodul einen zwischen dem Mittelbereich und dem Austrittsbereich angeordneten zusätzlichen Bereich (501) aufweist, der ein viertes optisches System (502) umfasst, welches die durch das zweite optische System kollimierten Lichtsignale in eine Hauptlichtabgaberichtung (503) der Scheinwerfervorrichtung abzulenken vermag.

7. Beleuchtungs- oder Signalgebungsvorrichtung nach wenigstens einem der vorhergehenden Ansprüche,
**dadurch gekennzeichnet, dass** der Austrittsbereich einen allgemein zylinderförmigen Querschnitt hat.

8. Beleuchtungs- oder Signalgebungsvorrichtung nach wenigstens einem der vorhergehenden Ansprüche,
**dadurch gekennzeichnet, dass** der Austrittsbereich eine gekrümmte Austrittsfläche (135) aufweist, welche die Lichtsignale am Ausgang des Lichtstreuungsmoduls in einer Ebene aufzufächern vermag, die zu einer Hauptlichtabgaberichtung der Scheinwerfervorrichtung lotrecht ist.

9. Beleuchtungs- oder Signalgebungsvorrichtung nach wenigstens einem der vorhergehenden Ansprüche,
**dadurch gekennzeichnet, dass** das Lichtstreuungsmodul wenigstens einen Befestigungsstift (141; 142) aufweist, um das Lichtstreuungsmodul auf der Leiterplatte zu befestigen, die die Leuchtdiode trägt, welche die Lichtsignale zu dem betreffenden Modul emittiert.

10. Beleuchtungs- oder Signalgebungsvorrichtung nach dem vorhergehenden Anspruch,
**dadurch gekennzeichnet, dass** der Eintrittsbereich eine Eintrittsbreite (I1) hat, und dass das Lichtstreuungsmodul einen ersten Befestigungsstift (141) und einen zweiten Befestigungsstift (142) aufweist, die beidseits der Eintrittsbreite angeordnet sind.

11. Beleuchtungs- oder Signalgebungsvorrichtung nach wenigstens einem der vorhergehenden Ansprüche,
**dadurch gekennzeichnet, dass** das Lichtstreuungsmodul ein einstückig ausgebildetes Teil ist.

12. Beleuchtungs- oder Signalgebungsvorrichtung nach dem vorhergehenden Anspruch,
**dadurch gekennzeichnet, dass** das Lichtstreuungsmodul aus Polymethylmethacrylat ausgeführt ist.

13. Beleuchtungs- oder Signalgebungsvorrichtung nach Anspruch 11,
**dadurch gekennzeichnet, dass** das Lichtstreuungsmodul aus Polycarbonat ausgeführt ist.

14. Scheinwerfervorrichtung,
**dadurch gekennzeichnet, dass** sie eine einstückig ausgebildete Leiste (402) umfasst, die von mehreren Beleuchtungs- oder Signalgebungsvorrichtungen nach wenigstens einem der vorhergehenden Ansprüche gebildet ist, wobei die Austrittsflächen der Austrittsbereiche ihrer Breite nach in einer Reihe angeordnet sind.

15. Scheinwerfervorrichtung nach dem vorhergehenden Anspruch,
**dadurch gekennzeichnet, dass** sie von einer der folgenden Arten ist: Rückfahrscheinwerfer, Fahrtrichtungsanzeiger, seitliche Blinkleuchte, Nebelschlussleuchte, Bremsleuchte, hochgesetzte Bremsleuchte, Deckenleuchte, Zierlichtleiste.
